# EUROPEAN PATENT SPECIFICATION

(11) **EP 2 039 967 B1**
(45) Date of publication and mention of the grant of the patent: **13.02.2013**
(21) Application number: 06767976.1
(22) Date of filing: 07.07.2006
(51) Int. Cl.: F16J 15/32

(54) **SHAFT SEALING DEVICE**
WELLENDICHTUNGSVORRICHTUNG
DISPOSITIF DE SCELLEMENT D'UN ARBRE

(43) Date of publication of application: 25.03.2009
(73) Proprietor: Eagle Industry Co., Ltd., Minato-ku Tokyo 105-8587 (JP)
(72) Inventor: SANADA, Masamitsu, Minato-ku Tokyo 105-8587 (JP)
(74) Representative: Isarpatent
(86) International application number: PCT/JP2006/313566
(87) International publication number: WO 2008/004303

(56) References cited:
- DE-A1- 3 535 444
- JP-A- 7 305 775
- JP-A- 8 075 008
- JP-A- 06 201 055
- JP-A- 09 229 203
- JP-A- 2000 179 702
- JP-U- H0 224 159
- JP-U- 01 143 467
- JP-U- 03 020 762
- JP-U- 59 077 617
- JP-U- 60 084 861

## Description

### TECHNICAL FIELD

The present invention relates to a shaft seal apparatus which provides a tight seal against a pressurized fluid in the clearance defined between a rotary shaft which is inserted in a bore surface of a housing and the bore surface. More particularly, this invention relates to a shaft seal apparatus improved a high pressure resistance ability against pressurized fluid and an easy installation by arranging a sealing portion made of a rubber elastic material which is in parallel to another sealing portion made of a resin material, according to the preamble of claim 1 and as it is disclosed in JP 7305775A.

### BACKGROUND ART

As a related art relative to the shaft seal apparatus of the present invention, there is a similar shaft seal apparatus disclosed in the patent reference 1 which is described in below. This shaft seal apparatus provides a seal against the pressurized fluid by being installed in the bearing mount bore for a rotary shaft penetrating through the wall of a pump housing. This pressurized fluid, for example, is cooling water for cooling a radiator after being pressure-fed by the pump.

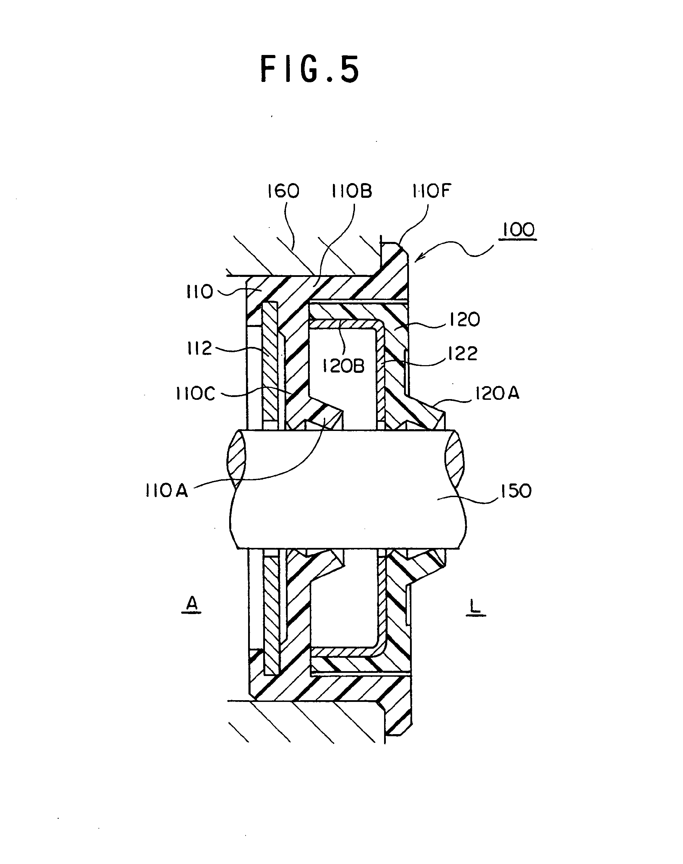

This shaft seal apparatus 100 is constructed as shown in Fig.5. Fig.5 is a full cross-sectional view of the shaft seal apparatus 100. The shaft seal apparatus 100 consists of a first sealing portion 110 and a second sealing portion 120. The first sealing portion 110 is made of an elastomeric material having a T-shaped cross-section design. The first sealing portion 110 is comprised of a first fitting portion 110B of cylindrical tube design, a radially spanning separation diaphragm 110C, and a two-way splitting seal lip at the inward edge of the separation diaphragm 110C. Also, a seal is provided against the pressurized fluid by the first sealing lip 110A which is disposed in the pressurized-fluid side L (inside the machine) of the sealing lip and is in a seal-tight contact against the outer surface of the rotary shaft 150. The pressurized-fluid side L of the first fitting portion 110B is formed on a flange portion 110F resting against the end face of the housing 160. The other end portion of the outside machine A which is opposite of the first fitting portion 110B of the flange portion 110F has an annular groove. A first support diaphragm 112 is fitted in the annular groove 110F. This ring-shaped first support diaphragm 112 provides a support against the separation diaphragm 110C when the pressurized fluid exerts a pressure against the separation diaphragm 110C.

The second sealing portion 120 is arranged along the inner circumferential surface of the first fitting portion 110B. The second sealing portion 120 of L-shaped cross-section design, and a second fitting portion 120B is fitted to the first fitting portion 110B from the pressurized-fluid side L. This second sealing portion 120 has a second sealing lip 120A which rests tightly against the rotary shaft 150. This second sealing portion 120 is also supported by a second support diaphragm 122 which is a L-shaped cross-section design.

In the shaft seal apparatus 100 thus arranged, the first sealing portion 110 and the second sealing portion 120 are made of an elastomeric material in its entirety. In the shaft seal apparatus 100 made of an elastomeric material, because the temperature of pressurized fluid exceeds 100 °C when cooling the radiator, the elastomeric material of the first sealing portion 110 resting against the heated housing 160 is subjected to a thermal deformation. In particular, the flange portion 110F is prone to the deformation because it contacts with housing 160 which easily heats up and the high-temperature pressurized fluid, thus unable to ascertain the accurate retaining of the first sealing portion 110. Also, since the second portion 120 engages with the first sealing portion 110 as well which is made of an elastomeric material, it causes a deformation in the first sealing portion 110 making the mounting position of the second sealing portion 120 inaccurate. Consequently, a shaft seal apparatus 100 thus configured is not suitable for providing a seal against high-temperature or high-pressure fluid. Also since the first support diaphragm 112 and the second support diaphragm 122 are retained by the elastomer-made first sealing portion 110, it fails to provide a sufficient support to the first sealing portion 110A and the second sealing portion 120A for high-pressure fluid. Thus, it will be difficult to improve the sealing ability of the shaft seal apparatus 100.

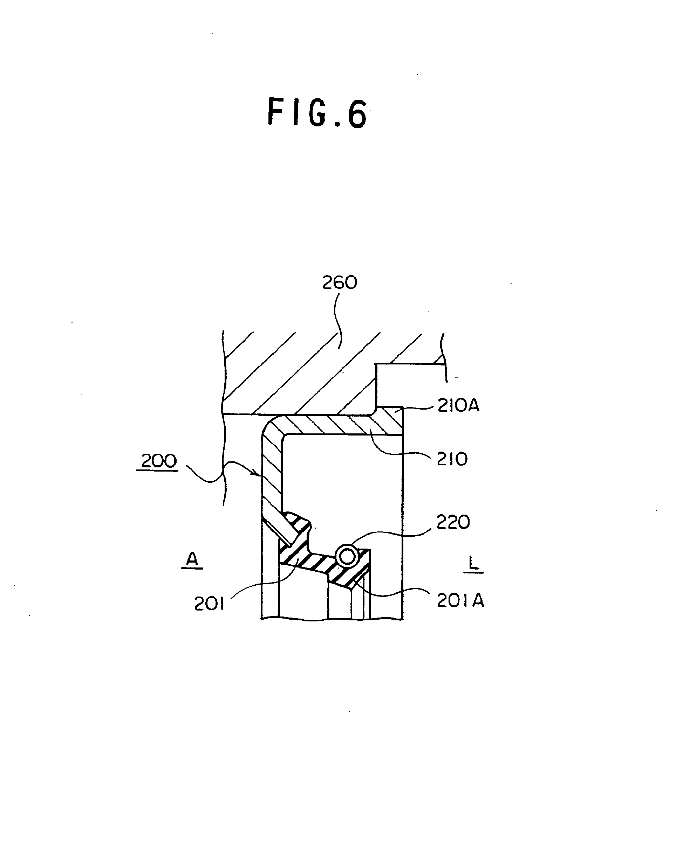

A sealing apparatus 200 shown in Fig.6 is similar to what is disclosed in patent reference 2 given below. This sealing apparatus 200 is an oil seal to provide a seal against pressurized fluid located in the machine interior L from the bearing. Note that the right-hand side of Fig.6 represents the machine interior L while the left-hand side represents the machine exterior A. The sealing apparatus 200 disposes a sealing lip 201 being mounted along the inner circumferential edge of a metal ring 210. This sealing lip 201 has a sealing face 201A which contacts with a rotary shaft tightly, not shown in the figure. The sealing face 201A is resiliently tightened against the rotary shaft by means of a ring-shaped spring (garter spring) 220 which is mounted on the outer circumference of the sealing lip 201. And the free end of the cylindrical metal ring 210 defines a flange portion 210A. Manufacture of this flange portion 210A requires a difficult machining such as press forming or machining cut against the outer circumference of the thin-wall metal ring 210. Therefore, the sealing apparatus 200 is not suitable for mass-production.

If the metal ring 210 is fitted in the mount bore of a housing 260 the pressurized fluid may leak out through the fit clearance between the metal ring 210 and the housing 260. Furthermore, the pressurized fluid trapped in the fit clearance between the metal ring 210 and the housing 260 causes the metal ring 210 to rust. In case of taking out the sealing apparatus 200 from the mount bore of the housing 260 for repairing the sealing apparatus 200 or so, the press-fit metal ring 210 of the sealing apparatus 260 is very difficult to remove because of the tight-contact formed between the two elements. If rust is formed on the fit surface of the metal ring 210, a strong bonding caused by the rust makes even more difficult to remove from the housing 260.

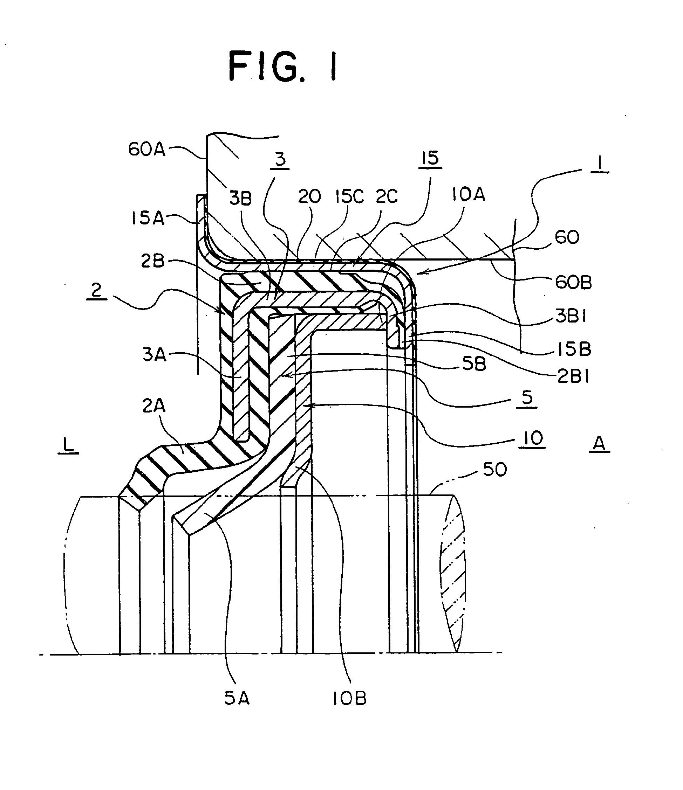

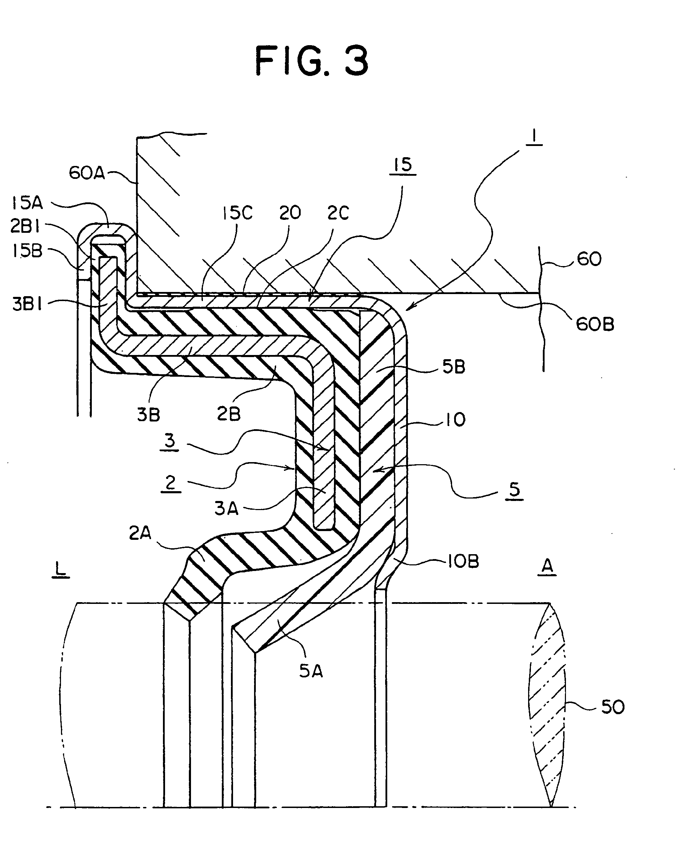

Patent reference 1: JP, Patent 2004-516439,A (Fig.3) or EP,0706001,A1 (Fig.3)
Patent reference 2: JP, Utility model 5-40362,Y2 (Fig.1)

### DISCLOSURE OF THE INVENTION

### TECHNICAL PROBLEMS TO BE SOLVED BY THE INVENTION

The present invention is introduced to resolve the above mentioned problems. Technical objects which the present invention intends to resolve include how a shaft seal apparatus can securely be positioned against the bore surface of the seal housing by means of an engagement ring and also to enable a second sealing portion to be retained by the engagement ring. Another goal is to assure that the shaft seal apparatus can easily be removed from the bore surface of the seal housing for replacement. Yet another goal is to enable the shaft seal apparatus to be mounted along the common axis to the rotary shaft by means of the stopper ring and to improve a seal ability of the fit mount surface against the seal housing.

### MEANS TO RESOLVE TECHNICAL PROBLEMS

The present invention is made to solve the above technical problems and a solution to such problems is embodied as follows.

A shaft seal apparatus according to the present invention is a shaft seal apparatus for providing a seal against pressurized fluid between a bore surface of a seal housing and a shaft, said shaft seal apparatus comprising:
a first sealing portion having a fit mount portion, a first sealing lip and a reinforcement ring, said first sealing portion being made of a rubber elastic material, said fit mount portion being retained sealingly in said seal housing side, said first sealing lip having an integral form with said fit mount portion, an inner circumferential surface of said first sealing lip sealingly fitting on the outer diameter surface of said shaft for providing a seal against the pressurized fluid, said reinforcement ring having a reinforcement portion, a cylindrical portion and a joint portion, said reinforcement portion providing a reinforcement against said fit mount portion side of said first sealing lip, said cylindrical portion being integrally joined with said fit mount portion, and said joint portion being disposed at the other end of said cylindrical portion;
a second sealing portion having a support portion and a second sealing lip, said second sealing portion being made of a resin material, said support portion being in tight contact on said first sealing portion by the opposite side relative to the pressurized fluid, said support portion being arranged in parallel to said first sealing portion and said second sealing lip sealingly fitting the on said shaft at one inner circumferential portion of said support portion;
a first backup diaphragm being supported by an engagement ring or said reinforcement ring retaining said support portion of said second sealing portion; and characterized in that said shaft seal apparatus further comprises
an engagement ring having a fitting portion, a first engagement portion and a second engagement portion, said engagement ring being of a high rigidity, said fitting portion fitting in said bore surface of said seal housing, said first engagement portion engaging against the end face of said seal housing, said second engagement portion supporting the mount position of said first sealing portion in cooperation with said first engagement portion;
wherein a seal made of a rubber elastic material is disposed between contact surfaces of said engagement ring and said bore surface, and radial thickness of said seal is arranged smaller than that of said reinforcement ring or said engagement ring.

### EFFECT OF THE INVENTION

According to the shaft seal apparatus related to the present invention, the stopper ring which retains the first sealing portion and the second sealing portion against the seal housing disposes a first stopper portion which engages against the end face of the seal housing. Therefore, when the shaft seal apparatus is secured in a specific position of the bore surface of the seal housing, no step shoulder portion needs to be disposed therein for axial positioning. This permits to install into a seal housing comprising a bore surface which a step shoulder portion for positioning is hard to form. At the same time, since the stopper ring having a second stopper portion therein provides a support in conjunction with the reinforcement ring against the first sealing portion and the second sealing portion, the assembly structure becomes simple and the assembling becomes easy.

Also a seal made of a rubber elastic material in which the thickness of the seal is thinner than that of the reinforcement ring or engagement ring is applied to the fit surface of the seal housing of the engagement ring. Therefore, due to such a thin seal, not only it achieves an easy installation/de-installation of the shaft seal apparatus against the bore surface of the seal housing when replacing, but also provides an effective seal between the seal housing and the engagement ring for a long period. Further, due to the thin wall of the seal, an elastic deformation is small and enables a concentric fitting of the shaft seal apparatus against the rotary shaft. Also since the thin wall nature of the seal prevents the shaft seal apparatus from sticking to the bore surface of the seal housing 60 even after a long period of use, it is easy to remove from the bore surface of the seal housing 60 for replacement.

### BRIEF DESCRIPTION OF THE DRAWINGS

[FIG.1] half cross-sectional view of a shaft sealing apparatus according to an embodiment 1 of the present invention.

[FIG.2] half cross-sectional view of the shaft sealing apparatus in Fig.1 containing a rotary shaft therein.

[FIG.3] half cross-sectional view of a shaft sealing apparatus according to an embodiment 2 of the present invention.

[FIG.4] half cross-sectional view of a shaft sealing apparatus according to an embodiment 3 of the present invention.

[FIG.5] half cross-sectional view of a shaft sealing apparatus showing a relative art of the present invention.

[FIG.6] half partial cross-sectional view of a oil seal showing a relative art of the present invention.

### EXPLANATIONS OF LETTERS OR NUMRERALS

- 1: shaft sealing apparatus
- 2: first sealing portion
- 2A: first sealing lip
- 2B: fit mount portion
- 2B1: first joint portion
- 2C: fitting surface
- 3: reinforcement ring
- 3A: reinforcement portion
- 3B: cylindrical portion
- 3B1: second joint portion
- 5: second sealing portion
- 5B: support portion
- 5A: second sealing lip
- 5A1: second sealing surface
- 10: first backup diaphragm
- 10A1: separation diaphragm
- 10A: pressure-support portion
- 10B: seating portion
- 15: stopper ring (stopper plate)
- 15A: first stopper portion
- 15B: second stopper portion
- 15C: fitting portion
- 20: seal (rubber layer)
- 50: shaft (rotary shaft)
- 60: seal housing
- 60A: end face
- 60B: bore surface (bore)
- A: machine exterior
- L: machine interior

### BEST MODE FOR CARRYING OUT THE INVENTION

Described below are details of the figures of the preferred embodiments of a seal device constructed according to the present invention. All the figures explained below are constructed according to the actual design drawings with accurate dimensional relations.

### EMBODIMENT 1

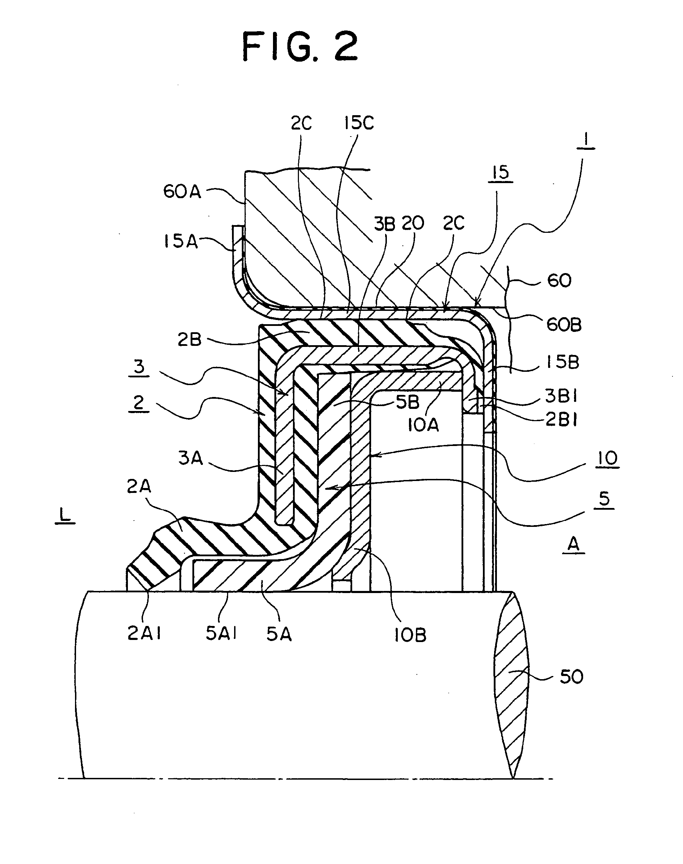

First, the embodiment 1 of the shaft seal apparatus 1 according to the present invention is explained. Fig.1 is a half cross-sectional view of the shaft sealing apparatus 1. Also, Fig.2 is a half cross-sectional view of the shaft sealing apparatus 1 in Fig.1 contained in a rotary shaft 50. Further explanations refer to Fig.1 and Fig.2. The rotary shaft 50 is installed in a bore surface 60B (hereinafter referred to as a bore) disposed in the housing 60. The shaft seal apparatus 1 provides a seal against pressurized fluid which is contained in machine interior L between the bore 60B and the rotary shaft 50. This pressurized fluid, for instance, is cooling water accompanied with temperature and pressure. More specifically, it provides a seal against cooling water for cooling a radiator or the like.

A first sealing portion 2 is comprised of a fit mount portion 2B of cylindrical tube design, a first sealing lip 2A extending from one end of the fitting portion 2B in radially inward direction, and joint portions 2B1 and 3B1 located at the extension of the other end of the fit mount portion 2B. A first seal surface 2A1 located at the inner edge of the first sealing lip 2A is in seal-tight contact against the rotary shaft 50 (see Fig.2. Note that the first seal surface 2A1 becomes more flat than shown in Fig.2 because of an elastic deformation of the inner edge corner after making contact with the rotary shaft 50). Also, the fitting surface 2C of the outer circumference of the fit mount portion 2B forms a joint after being fitted in the inner circumferential surface of the fitting portion (fixed portion) 15C of a stopper ring 15. This first sealing portion 2 is formed into a sealing body (hereinafter referred to as the body) by molding a rubber material or resin material which exhibits rubber-like elastic deformation. The body contains a reinforcement ring 3 buried therewith to provide a support for the first joint portion 2B1 side of the body. Namely, the reinforcement ring 3 has the flange-shaped reinforcement portion 3A providing a support against the fit mount portion 2B side of the first sealing lip 2A, together with placing the cylindrical portion 3B inside the fit mount portion 2B, and the second joint portion 3B1 opposite to the reinforcement portion 3A of the reinforcement ring 3, thereby provides a reinforcement to the first joint portion 2B1. The joint portions 2B1 and 3B1 1 of the first sealing portion 2 formed by the first joint portion 2B1 and the second joint portion 3B1 can be simplified to the second joint portion 3B1 alone without the first joint portion 2B1, in case that it has constitution that the pressurized fluid does not leak out from the space connecting the first joint portion 2B1 and the engagement ring 15. The reinforcement ring 3 may be reinforced by adhering to the side of the body if necessary.

Material for the reinforcement ring 3 is chosen from steel plate, aluminum alloy, stainless steel or the like. Also a suitable material for the body of the first sealing portion 2 are fluoroelastomer such as ISO-code FPM (VITON as a product name), nitrile rubber such as ISO-code HNBR, acrylic rubber, fluoro-rubber (FKM), perfluoroelastomer (FFKM), silicone rubber (VMQ), ethylene propylene rubber (EPDM) or the like.

The second sealing portion 5 is formed in an annular diaphragm design, and a second sealing lip 5A is formed by bending the outer circumferential side of the support portion 5B to inner side of the machine interior L. The support portion 5B is arranged so that it is in contact with the radially spanning portion of the fit mount portion 2B of the first sealing lip 2A. This second sealing portion 5 is made of a resin material. Also, the second sealing portion 5 can be made of a rubber elastic material, but a hard material is preferred since it has a function to provide a support against the pressurized fluid for the first sealing lip 2A. That is, the second sealing portion 5 is arranged more or less in parallel to the first sealing lip 2A. As shown in Fig.2, a second seal surface 5A1 located in the inner circumferential side of the second sealing lip 5A rests tightly and cylindrically against the outer circumferential surface of the rotary shaft 50. Furthermore, the cylindrical outer circumferential surface of the second sealing lip 5A comes to a close proximity with the opposing surface of the first sealing lip 2A. When a high pressure is directly acted from the pressurized fluid on the first sealing lip 2A under this arrangement, the second sealing lip 5A being supported by the second sealing surface 5A1 which fits in the rotary shaft 50 can provide a significant support to the first sealing lip 2A.

First backup support diaphragm 10 provides a support to the support portion 5B from its back side, under a situation that the outer circumferential surface of the second sealing portion 5 fits in the inner circumferential surface of the fit mount portion 2B. The first backup diaphragm 10 has an annular body and L-shaped cross section. This first backup diaphragm 10 has a seating portion 10B on inner circumferential portion of the first back up diaphragm 10 which supports the inflected portion of the second sealing lip 5A. Also a pressure receiving portion 10A is disposed on the other end of the cylindrical portion of the outer circumferential side of the first backup diaphragm 10. And the second joint portion 3B1 provides a support for the pressure receiving portion 10A while the first backup portion 10 brings the support portion 5B of the second sealing portion 5 into tight contact against the first sealing lip 2A.

The first sealing portion 2 and the second sealing portion 5 thus assembled are brought into tight fit when being inserted in the bore 60B of the seal housing 60 via the engagement ring 15. The engagement ring 15 has a fitting portion 15C of cylindrical tube design which fits in the bore 60B, and has a flange-shaped first engagement portion 15A in its one end. The first engagement portion 15A is able to determine the position of the installation of the first sealing portion 2 and the second sealing portion 5 by engaging with the end face 60A of the seal housing 60. Also disposed on the opposite end of the first stopper portion 15A relative to the fitting portion 15C is a second engagement portion 15B. This second engagement portion 15B provides a support in cooperation with the first engagement portion 15A such that the first sealing portion 2 and the second sealing portion 5 are securely retained. Note that, the second engagement portion 15B makes a positioning of the joint portions 2B1 and 3B1 of the first sealing portion 2 by abutting the joint portions 2B1 and 3B1 of the first sealing portion 2 against each other, and provides a support for the pressure-receiving portion 10A of the first backup diaphragm 10. Also, the second engagement portion 15B, as shown in Fig.3, can be extended radially inward in order to form a ring-shaped cavity between itself and the first backup diaphragm 10. The ring-shaped cavity can be used to hold pressurized fluid leaking from the second sealing lip 5A. Thereby, it prevents the leakage of the pressurized fluid into the machine exterior A. Preferably a seal 20 (hereinafter referred to as a rubber layer according to an actual embodiment. Note that, this seal 20 is made of a rubber material or a resin material.) which is arranged thinner than the thickness of the fitting portion 15C is adhered on the fitting surface of the bore 60B of the seal housing 60 of the engagement ring 15. This fitting portion 15C has high precision in diameter because it is molded by press-forming process in deep drawing by the mold. There can be seen another example in which the rubber layer 20 is disposed only on the outer circumferential surface of the fitting portion 15C. Because this fitting portion 15C has a high precision in its diameter, even an arrangement using a thin rubber layer 20 can provide a seal against the pressurized fluid.

Alternatively the seal 20 can be adhered or integrally molded so that a plurality thereof are arranged in a ring form along the fitting portion 15C in the axial direction. Yet alternatively, the seal 20 can take a form of a single or a plurality of sealing rings of square cross-section design disposed on the outer circumferential surface of the fitting portion 15C (in case of thick seal 20 of square, triangular or elliptical cross-section design, the opposing surface of the engagement ring 15 or the bore 60B which mounts the seal 20 preferably has small concavities so that the gap between the outer circumferential surface of the fitting portion 15C and the fit bore 60B is kept small). Note that the seal 20 provides a seal against the pressurized fluid by being compressed between the fitting portion 15C and the bore 60B. In case of embodiment 1 in Fig.1, there may be a situation where a rubber layer 20 is not used for the end face 60A side of the first engagement portion 15A. Namely, the first engagement portion 15A directly abuts against the end face 60A. Furthermore, materials used for the engagement ring 15 were steel, stainless steel, brass, aluminum, hard resin or the like. Also, a material for the rubber layer 20 was polyacrylate rubber, but a resin material or similar material which was used for the body of the first sealing portion 2 can be used.

According to the shaft seal apparatus 1 of the embodiment 1 thus arranged, when mounting it in the bore 60B of the seal housing 60, the engagement ring 15 makes positioning and fixation of the apparatus 1 easy even when the bore 60B does not have a step shoulder portion therein for the positioning and fixation of the shaft sealing apparatus 1. Also, the first engagement portion 15A of the shaft sealing apparatus 1 allows itself to be used for dismounting from the bore 60B of the seal housing 60. For example, a female threading is disposed in the first engagement portion 15A, not shown, at 3 circumferentially equally spaced positions, and male screws are inserted into each female threading. By using a jig, the engagement ring 15 can be removed from the seal housing 60. When the first sealing portion 2 and the second sealing portion 5 are removed from the engagement ring 15, it is preferable that the first backup diaphragm 10 located in the back side of the second sealing portion 5 be pushed towards the direction of machine interior L. Furthermore, having the second engagement portion 15B in tight-contact against the joint portion 2B1 and 3B1 of the first sealing portion 2 leads to a strong connection of the first sealing portion 2 against the second sealing portion 5 as the result of the connection force of each part. Note that the referral A represents machine exterior with respect to the machine interior L.

### EMBODIMENT 2

Described next is a shaft sealing apparatus 1 as an embodiment 2 according to the present invention. Fig.3 shows a half cross-sectional view of a shaft sealing apparatus 1 according to the embodiment 2. The case in Fig.3 also does not dispose a step shoulder portion in the bore 60B of the seal housing 60 for the axial positioning and fixation of the shaft sealing apparatus 1. What makes it different from Fig.1 is that the joint portion 2B1 and 3B1 of the first sealing portion 2 are disposed in the first engagement portion 15A side in contrast to the joint portion 2B1 and 3B1 of the first sealing portion 2 appeared in Fig.1. And the cylindrical portion 3B of the reinforcement ring 3 to the second joint portion 3B is formed in a flange-shape in the same direction as the first engagement portion 15A. The joint portions 2B1 and 3B1 of the first sealing portion 2 are constituted by the second joint portion 3B1 of the reinforcement ring 3 and the first joint portion 2B1 which extends from the fit mount portion 2B surrounding the second joint portion 3B1. And the joint portions 2B1 and 3B1 are securely retained for a tight connection between the first engagement portion 15A and the second engagement portion 15B which extends from the first engagement portion 15A of the engagement ring 15. Note that, the joint portion 2B1 and 3B1 of the first sealing portion 2 may not have a first joint portion 2B1 which is made of a rubber material.

In addition, the engagement ring 15 has a first backup diaphragm 10 in a radial direction which integrally connects with the other end located in the machine exterior A side relative to the fitting portion 15C, and also forms a seating portion 10B at the inner edge of the first backup diaphragm 10. Pressure-receiving portion of the first backup diaphragm 10 forms a joint point of the engagement ring 15 and the first backup diaphragm 10 which corresponds to the boundary, not shown, between the engagement ring 15 and the first backup diaphragm 10. And via this pressure-receiving portion, the first backup diaphragm 10 and the seating portion 10B securely retains the second sealing portion 5 in between the first sealing portion 2. Also, a rubber layer 20 disposed in the outer circumferential surface of the engagement ring 15 is an example only applied to the fitting portion 15C. Because the diameter of the fitting portion 15C has a high precision due to the deep drawing, even a thin rubber layer 20 can achieve a seal-tight fit to the bore 60B. Other consitutions are almost the same as the shaft sealing apparatus 1 depicted in Fig.1.

According to the shaft seal apparatus 1 of the embodiment 2 thus arranged, when mounting it in the bore 60B of the seal housing 60, the first engagement portion 15A of the engagement ring 15 makes the positioning and fixation of the apparatus 1 easy even in case that the bore 60B does not have a step shoulder portion therein for the positioning and fixation of the shaft sealing apparatus 1. When dismounting the shaft seal apparatus 1 from the bore 60B of the seal housing 60, the first engagement portion 15A is pulled from the bore 60B to pull out the shaft seal apparatus 1. Alternatively, the shaft seal apparatus 1 can easily be dismounted from the bore 60B of the seal housing 60 by pushing the first backup diaphragm 10 toward machine interior L.

### EMBODIMENT 3

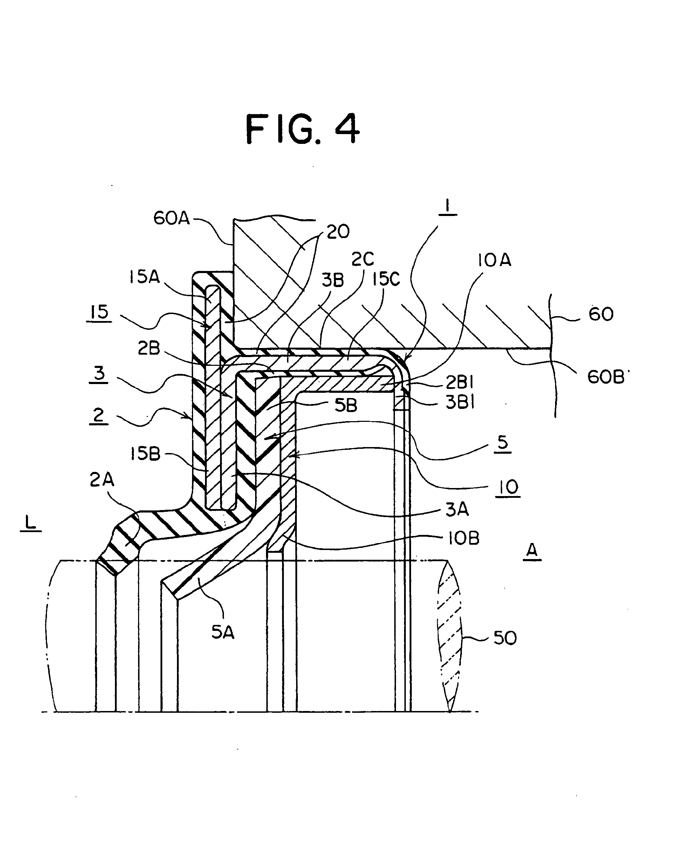

Next described is a shaft seal apparatus 1 of the embodiment 3 according to the present invention. Fig.4 shows a half cross-sectional view of a shaft sealing apparatus 1 related to the embodiment 3. The case in Fig.4 also does not dispose a step shoulder portion in the bore 60B of the seal housing 60 for the positioning and fixation of the shaft sealing apparatus 1. What makes it different from Fig.1 is that it represents a modification example in which the engagement ring (also referred to as a engagement diaphragm) 15 and the reinforcement ring 3 are arranged integrally. This reinforcement ring 3 has almost an identical form with the reinforcement ring 3 shown in Fig.1. Furthermore, the engagement ring 15 is joined with the reinforcement ring 3 as shown in Fig.4, and the cylindrical portion 3B of the reinforcement ring 3 is used as the part corresponding to the fitting portion 15C in Fig.1. That is, the engagement ring 15 has a first engagement portion 15A therein for positioning and fixing to the seal housing 60. A second engagement portion 15B at the inner circumference of the engagement ring 15 is spot-welded to the reinforcement portion 3A to be integrated. Note that, the joint of the second engagement portion 15B and the reinforcement portion 3A may be done by fixing the engagement ring 15 and the reinforcement ring 3 against each other by inserting the pins or bolts to the circumferentially and equally spaced axially-oriented bores. Also as seen in the second engagement portion 15B of Fig.3, an inflection can be used to join them. Further, the engagement ring 15 and the reinforcement ring 3 can also be formed integrally from one plate.

This first engagement portion 15A and the second joint portion 3B1 which are connected through the cylindrical portion 3B maintain the second sealing portion 5 in parallel to the first sealing portion 2 with the first engagement diaphragm 10. The outer circumferential side of this engagement ring 15 is the first engagement portion 15A, just as seen in Fig.1. The first engagement portion 15A is in tight contact with the end face 60A by covering the engagement ring 15 with a rubber body, however this is a modification example in which a rubber layer 20 fitting in the bore 60B of the seal housing 60 is an integral part of the outer diameter side of the fit mount portion 2B. Therefore, the contact surface against the bore 60B of the seal housing 60 which is provided by the fit mount portion 2B made of a rubber material plays the role of rubber layer 20. This means that the fit mount portion 2B and the rubber layer 20 are one body. Note that, in a similar way to Fig.1, the first stopper portion 15A can be made in a direct contact against the end face 60A without having a rubber layer 20 in the end face 60A side of the first stopper portion 15A. Rest of the arrangement is more or less the same as the shaft seal apparatus 1 shown in Fig.1.

The shaft sealing apparatus 1 of the embodiments 2 and 3 becomes as shown in Fig.2 when a rotary shaft 50 is inserted thereto. And the second sealing face 5A1 (refer to Fig.2) rests against the outer circumferential surface of the rotary shaft 50, providing a seal, while the second sealing lip 5A provides a support against the first sealing lip 2A when receiving the pressure from the pressurized fluid. Positioning of the engagement ring 15 is determined by abutting the first engagement portion 15A (or the rubber layer 20 when the rubber layer 20 is disposed in the first engagement portion 15A) which abuts against the end face 60A of the seal housing 60. Also, rubber layer 20 disposed in the cylindrical portion 3B or fitting portion 15C comes in seal-tight contact against the bore 60B of the seal housing 60 to shut out the pressurized fluid. Because the radial thickness of this rubber layer 20 is made thinner than the cylindrical portion 3B or the fitting portion 15C, a radial displacement of the shaft sealing apparatus 1 can be prevented even under an external loading condition, thus being able to exhibit an outstanding seal ability.

Further, according to the modification examples in Fig.3 and Fig.4, the engagement ring 15 and the first backup diaphragm 10 in Fig.3 are integrally connected via a joint point. In Fig.4, the second stopper portion 15B disposed in an inner edge portion of the engagement ring 15 is integrally joined with the engagement ring 3. And the second sealing portion 5 is sandwiched between the first sealing portion 2 with the first backup diaphragm 10 which is indirectly connected with the reinforcement ring 3. Thus, the first engagement portion 15A determines the position of the shaft sealing apparatus 1 in the bore 60B of the seal housing 60. At the same time, the first backup diaphragm 10 and the engagement ring 15 which are directly or indirectly connected to the reinforcement ring 3 keeps the second sealing portion 5 tightly connected against the first sealing portion 2 in parallel. Therefore, the shaft sealing apparatus 1 is positioned to the bore 60B of the seal housing 60, and provides an effective seal in the fit surface against the bore 60B of the seal housing 60.

Alternative embodiments according to the present invention , the constitution thereof, and the effect will be described.

A shaft sealing apparatus of a first invention according to the present invention is arranged in such a way that; the engagement ring has a first engagement portion which is of flange-shape design extending from one end of the fitting portion along the end face, and the second engagement portion which is of flange-shape design extending radially inward from the other end of the fitting portion and providing a support against the reinforcement ring, and the fitting portion fitting in the fit mount portion of the first sealing portion.

According to the shaft sealing apparatus of the first invention, the fitting portion of the engagement ring fits in the bore surface of the seal housing, and the first engagement portion which is disposed in one end of the fitting portion of the engagement ring makes positioning easy by abutting against the end face of the seal housing. At the same time, when replacing the shaft seal apparatus, the removal of the shaft seal apparatus from the seal housing becomes easy. Also the installation of the shaft seal apparatus becomes easy because the second engagement portion which is disposed in the other end of the fitting portion provides a support against the joint portion of the reinforcement ring. Thus, the first sealing portion fitting in the engagement ring is retained and the second sealing portion can easily be retained by the joint portion of the reinforcement ring via first backup diaphragm. When removing the first sealing portion and the second sealing portion from the engagement ring for the replacement while the engagement ring is still placed in the bore of the seal housing, it is easily removed by pushing against the first backup diaphragm to the axial direction. And the replacement is easily done by fitting a new first sealing portion and second sealing portion back to the engagement ring which will simply finish the replacement.

A shaft sealing apparatus of a second invention according to the present invention is arranged in such a way that the first engagement portion of the engagement ring of flange-shape design radially extending from one end of the fitting portion along the end face, the second stopper portion extends from the first stopper portion and surrounds the joint portion of the reinforcement ring, and integrally comprises the first backup diaphragm which supports the second sealing portion in the other end of the fitting portion.

According to the shaft sealing apparatus of the second invention, the first engagement portion of the engagement ring engages with the end face of the seal housing, and the second engagement portion is connected with the joint portion via the first engagement portion, thereby providing a strong joint between the engagement ring and the reinforcement ring. As the result, the first sealing portion and the engagement ring are connected via the reinforcement ring having the joint portion therein. At the same time, the first backup diaphragm disposed in the engagement ring provides a direct support against the second sealing portion. This permits a direct connection between the first sealing portion and the second sealing portion, thus simplifying structure thereof and improving seal ability thereof.

A shaft sealing apparatus of a third invention according to the present invention is arranged in such a way that the engagement ring is formed in an annular disk design, in which the first engagement portion disposed in the outer circumference thereof is made in parallel to the end face, the second engagement portion disposed in the inner circumference thereof is joined with the reinforcement ring, and that the joint portion of the reinforcement ring retains the second sealing portion with the first backup diaphragm.

According to the shaft sealing apparatus of the third invention, joining the reinforcement ring of the first sealing portion with the engagement ring (diaphragm) of annular-disk design makes it easy to engage the first engagement portion disposed in the outer circumference of the engagement ring against the end face of the seal housing. At the same time, as the reinforcement ring is joined with the second engagement portion which is disposed in the inner circumference of the annular disk, a rigid connection with the first sealing portion makes installation of the shaft seal apparatus strong. And the second sealing portion is firmly retained by the joint portion of the reinforcement ring with the first backup diaphragm. This arrangement tolerates a short axial-length design for the cylindrical portion of the shaft seal apparatus without sacrificing stable installation thereof against the bore surface of the seal housing. In addition, a pressure-resistant ability of the shaft seal apparatus is improved by a double-layered seal provided by the engagement diaphragm and the reinforcement portion against the bore surface of the seal housing.

### INDUSTRIAL APPLICABILITY

As described above, the shaft seal apparatus of the present invention provides an effective shaft seal apparatus which can easily be positioned for a easy installation against the bore surface of the seal housing. Also it provides a useful shaft seal apparatus which exhibits an outstanding seal ability against the bore surface of the seal housing and enjoys an easy mounting/dismounting as well as a secure installation.

## Claims

1. A shaft seal apparatus for providing a seal against a pressurized fluid between a bore surface (60B) of seal housing and a shaft, said shaft seal apparatus comprising:
a first sealing portion (2) having a fit mount portion (2B), a first sealing lip (2A) and a reinforcement ring (3), said first sealing portion (2) being made of a rubber elastic material, said fit mount portion (2B) being retained sealingly in said seal housing side, said first sealing lip (2A) having an integral form with said fit mount portion, an inner circumferential surface of said first sealing lip sealingly fitting on the outer circumferential surface of said shaft for providing a seal against the pressurized fluid, said reinforcement ring (3) having a reinforcement portion (3A) a cylindrical portion (3B) and a joint portion (3B1), said reinforcement portion providing a reinforcement against said fit mount portion side of said first sealing lip, said cylindrical portion being integrally joined with said fit mount portion, and said joint portion being disposed at the other end of said cylindrical portion;
a second sealing portion (5) having a support portion (5B) and a second sealing lip (5A), said second sealing portion being made of a resin material, said support portion (5B) being in tight contact on said first sealing portion (2) by the opposite side relative to the pressurized fluid, said support portion being arranged in parallel to said first sealing portion and said second sealing lip sealingly fitting on the said shaft at an inner circumferential portion of said support portion;
a first backup diaphragm (10) being supported by an engagement ring (15) or said reinforcement ring (3) retaining said support portion of said second sealing portion; and **characterized in that** said shaft seal appartus further comprises
an engagement ring (15) having a fitting portion (15C) a first engagement portion (15A) and a second engagement portion (15B), said engagement ring being of high rigidity, said fitting portion fitting in said bore surface (60B) of said seal housing, said first engagement portion engaging against the end face of said seal housing, said second engagement portion supporting the mount position of said first sealing portion (2) in cooperation with said first engagement portion;
wherein a seal (20) made of a rubber elastic material is disposed between a contact surfaces of said engagement ring (15) and said bore surface (60B), and radial thickness of said seal is arranged thinner than that of said reinforcement ring or said engagement ring.

2. The shaft seal apparatus as claimed in claim 1, wherein said first engagement portion of said engagement ring is of flange-shape design extending from one end of said fitting portion along said end face, said second engagement portion of said engagement ring is of flange-shape design extending from the other end of said fitting portion in a radially inward direction, said second engagement portion supports said reinforcement ring, and said fitting portion of said engagement ring fitting in said fit mount portion of said first sealing portion.

3. The shaft seal apparatus as claimed in claim 1, wherein said first engagement portion of said engagement ring is of flange-shape design extending from one end of said fitting portion along said end face, said second engagement portion of said engagement ring extends from said first engagement portion to form a joint with a joint portion of said reinforcement ring by surrounding said joint portion, said first backup diaphragm is integrally formed in the other end of said fitting portion, said first backup diaphragm supports said second sealing portion.

4. The shaft seal apparatus as claimed in claim 1, wherein said engagement ring is formed in an annular disk design, said first engagement portion disposed in the outer circumferential portion is arranged in parallel to said end face, said second engagement portion disposed in the inner circumferential portion is joined with said reinforcement ring, and the joint portion of said reinforcement ring retains said second sealing portion with said first backup diaphragm.

## Patentansprüche

1. Wellendichtungsvorrichtung zum Bereitstellen einer Dichtung gegen ein druckbeaufschlagtes Fluid zwischen einer Bohrungsfläche (60B) eines Dichtungsgehäuses und einer Welle, wobei die Wellendichtungsvorrichtung Folgendes umfasst:
- einen ersten Dichtungsabschnitt (2) mit einem Passungsmontageabschnitt (2B), einer ersten Dichtlippe (2A) und einem Verstärkungsring (3), wobei der erste Dichtungsabschnitt (2) aus einem Gummielastikmaterial besteht, wobei der Passungsmontageabschnitt (2B) in abdichtender Weise in der Dichtungsgehäuseseite gehalten wird, wobei die erste Dichtlippe (2A) eine integrale Form mit dem Passungsmontageabschnitt aufweist, wobei eine Innenumfangsfläche der ersten Dichtlippe in abdichtender Weise auf der Außenumfangsfläche der Welle gelagert ist, um eine Dichtung gegen das druckbeaufschlagte Fluid bereitzustellen, wobei der Verstärkungsring (3) einen Verstärkungsabschnitt (3A), einen zylindrischen Abschnitt (3B) und einen Verbindungsabschnitt (3B1) aufweist, wobei der Verstärkungsäbschnitt eine Verstärkung gegen die Passungsmontageabschnittseite der ersten Dichtlippe bereitstellt, wobei der zylindrische Abschnitt integral mit dem Passungsmontageabschnitt verbunden ist, und wobei der Verbindungsabschnitt am anderen Ende des zylindrischen Abschnitts angeordnet ist;
- einen zweiten Dichtungsabschnitt (5) mit einem Stützabschnitt (5B) und einer zweiten Dichtlippe (5A), wobei der zweite Dichtungsabschnitt aus einem Harzmaterial besteht, wobei der Stützabschnitt (5B) in einem festen Kontakt an dem ersten Dichtungsabschnitt (2) durch die gegenüberliegende Seite relativ zu dem druckbeaufschlagten Fluid steht, wobei der Stützabschnitt parallel zu dem ersten Dichtungsabschnitt angeordnet ist und die zweite Dichtlippe in abdichtender Weise an der Welle an einem Innenumfangsabschnitt des Stützabschnitts gelagert ist;
- eine erste Stützmembran (10), die durch einen Eingriffnahmering (15) oder den Verstärkungsring (3) gestützt wird, die den Stützabschnitt des zweiten Dichtungsabschnitts hält;
und **dadurch gekennzeichnet, dass** die Wellendichtungsvorrichtung des Weiteren Folgendes umfasst: einen Eingriffnahmering (15) mit einem Passungsabschnitt (15C), einem ersten Eingriffnahmeabschnitt (15A) und einem zweiten Eingriffnahmeabschnitt (15B), wobei der Eingriffnahmering eine hohe Steifigkeit aufweist, wobei der Passungsabschnitt in die Bohrungsfläche (60B) des Dichtungsgehäuses passt, wobei der erste Eingriffnahmeabschnitt die Endfläche des Dichtungsgehäuses in Eingriff nimmt, wobei der zweite Eingriffnahmeabschnitt die Montageposition des ersten Dichtungsabschnitts (2) im Zusammenwirken mit dem ersten Eingriffnahmeabschnitt stützt;
wobei eine Dichtung (20) aus einem Gummielastikmaterial zwischen einer Kontaktfläche des Eingriffnahmerings (15) und der Bohrungsfläche (60B) angeordnet ist und die radiale Dicke der Dichtung geringer ist als die Dicke des Verstärkungsrings oder des Eingriffnahmerings.

2. Wellendichtungsvorrichtung nach Anspruch 1, wobei der erste Eingriffnahmeabschnitt des Eingriffnahmerings die Form eines Flansches hat, der sich von einem Ende des Passungsabschnitts entlang der Endfläche erstreckt, der zweite Eingriffnahmeabschnitt des Eingriffnahmerings die Form eines Flansches hat, der sich von dem anderen Ende des Passungsabschnitts in einer radial einwärtigen Richtung erstreckt, der zweite Eingriffnahmeabschnitt den Verstärkungsring stützt; und der Passungsabschnitt des Eingriffnahmerings in den Passungsmontageabschnitt des ersten Dichtungsabschnitts passt.

3. Wellendichtungsvorrichtung nach Anspruch 1, wobei der erste Eingriffnahmeabschnitt des Eingriffnahmerings die Form eines Flansches hat, der sich von einem Ende des Passungsabschnitts entlang der Endfläche erstreckt, der zweite Eingriffnahmeabschnitt des Eingriffnahmerings sich von dem ersten Eingriffnahmeabschnitt erstreckt, um eine Verbindung mit einem Verbindungsabschnitt des Verstärkungsrings herzustellen, indem er den Verbindungsabschnitt umgibt, die erste Stützmembran integral in dem anderen Ende des Passungsabschnitts ausgebildet ist und die erste Stützmembran den zweiten Dichtungsabschnitt stützt.

4. Wellendichtungsvorrichtung nach Anspruch 1, wobei der Eingriffnahmering in Form einer ringförmigen Scheibe ausgebildet ist, der erste Eingriffnahmeabschnitt, der in dem Außenumfangsabschnitt angeordnet ist, parallel zu der Endfläche angeordnet ist, der zweite Eingriffnahmeabschnitt, der in dem Innenumfangsabschnitt angeordnet ist, mit dem Verstärkungsring verbunden ist, und der Verbindungsabschnitt des Verstärkungsrings den zweiten Dichtungsabschnitt mit der ersten Stützmembran hält.

## Revendications

1. Dispositif de joint d'arbre pour fournir un joint contre un fluide sous pression entre une surface d'alésage (60B) de logement de joint et un arbre, ledit dispositif de joint d'arbre comprenant :
- une première partie d'étanchéité (2) comportant une partie de montage par ajustement (2B), une première lèvre d'étanchéité (2A) et une bague de renfort (3), ladite première partie d'étanchéité (2) étant constituée d'un matériau élastique en caoutchouc, ladite partie de montage par ajustement (2B) étant retenue de manière étanche dans ledit côté de logement de joint, ladite première lèvre d'étanchéité (2A) ayant une forme solidaire de ladite partie de montage par ajustement, une surface circonférentielle intérieure de ladite première lèvre d'étanchéité étant ajustée de manière étanche sur la surface circonférentielle extérieure dudit arbre pour fournir un joint contre le fluide sous pression, ladite bague de renfort (3) ayant une partie de renfort (3A), une partie cylindrique (3B) et une partie de jonction (3B1), ladite partie de renfort fournissant un renfort contre ledit côté de partie de montage par ajustement de ladite première lèvre d'étanchéité, ladite partie cylindrique étant solidarisée avec ladite partie de montage par ajustement, et ladite partie jonction étant disposée au niveau de l'autre extrémité de ladite partie cylindrique ;
- une seconde partie d'étanchéité (5) ayant une partie de support (5B) et une seconde lèvre d'étanchéité (5A), ladite seconde partie d'étanchéité étant constituée d'un matériau de résine, ladite partie de support (5B) étant en contact étanche sur ladite première partie d'étanchéité (2) par le côté opposé par rapport au fluide sous pression, ladite partie de support étant agencée parallèlement à ladite première partie d'étanchéité et ladite seconde lèvre d'étanchéité étant ajustée de manière étanche sur ledit arbre au niveau d'une partie circonférentielle intérieure de ladite partie de support ;
- une première membrane d'appui (10) qui est supportée par une bague d'engagement (15) ou ladite bague de renfort (3) retenant ladite partie de support de ladite seconde partie d'étanchéité ; et
**caractérisé en ce que** ledit dispositif de joint d'arbre comprend en outre une bague d'engagement (15) ayant une partie d'ajustement (15C), une première partie d'engagement (15A) et une seconde partie d'engagement (15B), ladite bague d'engagement ayant une grande rigidité, ladite partie d'ajustement étant ajustée dans ladite surface d'alésage (60B) dudit logement de joint, ladite première partie d'engagement venant en prise contre la face d'extrémité dudit logement de joint, ladite seconde partie d'engagement supportant la position de montage de ladite première partie d'étanchéité (2) en coopération avec ladite première partie d'engagement ; dans lequel un joint (20) constitué d'un matériau élastique en caoutchouc est disposé entre les surfaces de contact de ladite bague d'engagement (15) et de ladite surface d'alésage (60B), et l'épaisseur radiale dudit joint est prévue pour être plus mince que celle de ladite bague de renfort ou de ladite bague d'engagement.

2. Dispositif de joint d'arbre selon la revendication 1, dans lequel ladite première partie d'engagement de ladite bague d'engagement est conçue en forme de bride s'étendant depuis une extrémité de ladite partie d'ajustement le long de ladite face d'extrémité, ladite seconde partie d'engagement de ladite bague d'engagement est conçue en forme de bride s'étendant depuis l'autre extrémité de ladite partie d'ajustement dans une direction radialement vers l'intérieur, ladite seconde partie d'engagement supporte ladite bague de renfort, et ladite partie d'ajustement de ladite bague d'engagement étant ajustée dans ladite partie de montage par ajustement de ladite première partie d'étanchéité.

3. Dispositif de joint d'arbre selon la revendication 1, dans lequel ladite première partie d'engagement de ladite bague d'engagement est conçue en forme de bride s'étendant depuis une extrémité de ladite partie d'ajustement le long de ladite face d'extrémité, ladite seconde partie d'engagement de ladite bague d'engagement s'étend depuis ladite première partie d'engagement afin de former une jonction avec une partie de jonction de ladite bague de renfort en entourant ladite partie de jonction, ladite première membrane d'appui est formée solidairement dans l'autre extrémité de ladite partie d'ajustement, ladite première membrane d'appui supporte ladite seconde partie d'étanchéité.

4. Dispositif de joint d'arbre selon la revendication 1, dans lequel ladite bague d'engagement est conçue en forme de disque annulaire, ladite première partie d'engagement disposée dans la partie circonférentielle extérieure est agencée parallèlement à ladite face d'extrémité, ladite seconde partie d'engagement disposée dans la partie circonférentielle intérieure est jointe à ladite bague de renfort, et la partie de jonction de ladite bague de renfort retient ladite seconde partie d'étanchéité avec ladite première membrane d'appui.
